# EUROPÄISCHE PATENTSCHRIFT

(11) **EP 3 003 852 B1**
(45) Veröffentlichungstag und Bekanntmachung des Hinweises auf die Patenterteilung: **15.03.2017**
(21) Anmeldenummer: 14724690.4
(22) Anmeldetag: 08.05.2014
(51) Int. Cl.: B63G 8/08, B63H 21/00

(54) **ANTRIEBSSYSTEM FÜR EIN WASSERFAHRZEUG, VERFAHREN ZUM BETRIEB EINES ANTRIEBSSYSTEMS SOWIE WASSERFAHRZEUG MIT EINEM ANTRIEBSSYSTEM**
PROPULSION SYSTEM FOR A WATER CRAFT, METHOD FOR OPERATING A DRIVE SYSTEM AND WATER CRAFT WITH A DRIVE SYSTEM
SYSTÈME D'ENTRAÎNEMENT POUR VÉHICULE NAUTIQUE, PROCÉDÉ DE FONCTIONNEMENT D'UN SYSTÈME D'ENTRAÎNEMENT ET VÉHICULE NAUTIQUE DOTÉ D'UN SYSTÈME D'ENTRAÎNEMENT

(30) Priorität: 21.08.2013 EP 13181188
(43) Veröffentlichungstag der Anmeldung: 13.04.2016
(73) Patentinhaber: Siemens Aktiengesellschaft, 80333 München (DE)
(72) Erfinder: HOFFMANN, Joachim, 90559 Burgthann (DE)
(86) Internationale Anmeldenummer: PCT/EP2014/059472
(87) Internationale Veröffentlichungsnummer: WO 2015/024678

(56) Entgegenhaltungen:
- US-B1- 7 938 077

## Beschreibung

Die Erfindung betrifft ein Antriebssystem für ein Wasserfahrzeug, insbesondere für ein Unterwasserfahrzeug wie ein U-Boot oder ein unbemanntes Unterwasserfahrzeug. Die Erfindung betrifft weiterhin ein Verfahren zum Betrieb eines solchen Antriebssystems sowie ein Wasserfahrzeug mit einem solchen Antriebssystem.

Unterwasserfahrzeuge, wie z.B. U-Boote, sind unter anderem mit Brennstoffzellenanlagen ausgestattet, durch welche Energie für den Betrieb des Fahrzeugs erzeugt wird. Die Brennstoffzellenanlage wird mit reinem Wasserstoff und Sauerstoff oder mit wasserstoff- bzw. sauerstoffhaltigen Gasen versorgt, welche die Betriebsgase sind. Es gibt mehrere Möglichkeiten die Betriebsgase Wasserstoff und Sauerstoff zu speichern, z.B. in Form von verflüssigten Gasen in Kryotanks, in Form von komprimierten Gasen in Druckbehältern oder ad-/absorbiert auf/in einem Trägermaterial, wie z.B. in einem Metallhydridspeicher.

Im Betrieb eines auf die Verbrennung von Wasserstoff und Sauerstoff basierten Antriebssystems eines Unterwasserfahrzeugs wird jedes Betriebsgas z.B. aus einem Betriebsgasbehälter, in dem es sich unter hohem Druck befindet, entnommen und in die Brennstoffzellenanlage geleitet. In der Brennstoffzellenanlage reagieren beide Betriebsgase zu Produktwasser ab. Verbleibende, unverbrannte Restgase treten aus einer Gasableitung der Brennstoffzellenanlage aus und müssen entsorgt werden. Die Entsorgung kann auf zweierlei Weise erfolgen: entweder durch Abgabe an die Atmosphäre bzw. Umgebung oder in geeignete Speicherbehälter. Diese Gasableitung funktioniert nur, wenn entweder ein ausreichendes Volumen für die Speicherbehälter zur Verfügung steht oder die umgebende Atmosphäre ein hinreichend großes Volumen einnimmt, damit die austretenden Gase verdünnt werden.

Im Falle eines Unterwasserfahrzeugs ist jedoch das Volumen begrenzt. Eine Ableitung des Restgases ins Wasser ist auch nicht ohne weiteres möglich, denn das Restgas u. U. gegen den außenseitig anstehenden hydrostatischen Druck aus dem Inneren des Unterwasserfahrzeuges hinausgeleitet werden müssen. Wenn der Betriebsdruck der Brennstoffzellenanlage hierzu nicht ausreichend groß ist, wird das Restgas verdichtet. Als Verdichter werden in der Regel elektrisch angetriebene Maschinen eingesetzt, die jedoch einen Teil der in der Brennstoffzellenanlage generierten elektrischen Energie verbrauchen.

Der Erfindung liegt daher die Aufgabe zugrunde, die Energiebilanz eines Antriebssystems eines Unterwasserfahrzeugs zu verbessern.

Die Aufgabe wird erfindungsgemäß gelöst durch ein Antriebssystem für ein Wasserfahrzeug, insbesondere für ein Unterwasserfahrzeug wie ein U-Boot oder ein unbemanntes Unterwasserfahrzeug, umfassend eine Brennstoffzellenanlage, mindestens einen Betriebsgasbehälter zum Versorgen der Brennstoffzellenanlage mit einem Betriebsgas, eine zwischen dem Betriebsgasbehälter und der Brennstoffzellenanlage angeordnete Turbine zum Entspannen des Betriebsgases vor seinem Eintritt in die Brennstoffstellenanlage sowie einen Verdichter zum Verdichten eins Restgases aus der Brennstoffstellenanlage, wobei der Verdichter und die Turbine ein gemeinsames Getriebesystem.

Die Aufgabe wird zudem erfindungsgemäß gelöst durch ein Verfahren zum Betrieb eines Antriebssystems für Wasserfahrzeug, insbesondere für ein Unterwasserfahrzeug wie ein U-Boot oder ein unbemanntes Unterwasserfahrzeug, wobei ein Betriebsgas aus mindestens einem Betriebsgasbehälter in einer Turbine entspannt wird, das entspannte Betriebsgas anschließend in eine Brennstoffzellenanlage zum Verbrennen eingeleitet wird, nach der Verbrennung des Betriebsgases in der Brennstoffzellenanlage Restgas aus der Brennstoffzellenanlage abgeleitet und mittels eines Verdichters verdichtet wird, wobei der Verdichter durch die Turbine angetrieben wird.

Die Aufgabe wird schließlich erfindungsgemäß gelöst durch ein Wasserfahrzeug, insbesondere ein Unterwasserfahrzeug wie ein U-Boot oder ein unbemanntes Unterwasserfahrzeug, mit dem oben beschriebenen Antriebssystem.

Die in Bezug auf das Antriebssystem nachstehend angeführten Vorteile und bevorzugten Ausgestaltungen lassen sich sinngemäß auf das Verfahren zum Betrieb eines Antriebssystems sowie auf das Wasserfahrzeug mit einem solchen Antriebssystem übertragen.

Unter Wasserfahrzeug wird hierbei sowohl ein Überwasserfahrzeug wie ein Schiff oder ein Unterwasserfahrzeug wie U-Boot oder ein unbemanntes Unterwasserfahrzeug verstanden.

Die Erfindung basiert auf der Idee das Betriebsgas nach dem Betriebsgasbehälter zu entspannen und die Entspannungsarbeit zu nutzen, um über das Getriebesystem den Verdichter über die Dreharbeit der Turbine anzutreiben. Auf diese Weise wird auf einen elektrisch angetriebenen Motor für den Verdichter verzichtet, so dass insgesamt weniger elektrische Energie verbraucht wird. Das Getriebesystem umfasst hierbei insbesondere auch ein Übersetzungsgetriebe, das zwischen der Entspannungsturbine und dem Verdichter angeordnet ist. Denkbar ist auch die Anordnung der Turbine und des Verdichters an einer gemeinsamen Welle.

Im Betrieb tritt mehr Betriebsgas in die Brennstoffzellenanlage ein, als das Restgas, das aus der Brennstoffzellenanlage herauskommt. In der Regel werden in einer kaskadierten Brennstoffzellenanordnung ca. 99% der Betriebsgase intern umgesetzt und nur ca. 1% von den Betriebsgasen tritt als Restgas heraus. Diese Restgasmenge lässt sich über den Entspannungs-Verdichter-Prozess relativ einfach auf ein erforderliches Druckniveau anheben und aus dem Unterwasserfahrzeug in das umgebende Meer befördern.

Bevorzugt weist das Betriebsgas vor der Turbine einen Druck von mindestens ca. 200 bar, ca. 350, insbesondere ca. 700 und nach der Turbine einen Druck von ca. 5-10 bar auf. Hierzu sind auf der Wasserstoffseite Druckspeicherbehälter mit einem anfänglichen Fülldruck von ca. 350 bar vorgesehen. Für die Sauerstoffseite sind Druckspeicherbehälter mit einem Druck insbesondere zwischen 200 und 350 bar erforderlich. Es ist auch möglich auf der Wasserstoff- und/oder Sauerstoffseite auch Sonderbehälter mit einem Druck bis 700 bar einzusetzen. Je nach eingesetztem Behälter kann ein unterschiedlicher anfänglicher Druck auf der Wasserstoffseite und der Sauerstoffseite herrschen. Dieser Druck fällt mit zunehmendem Verbrauch des jeweiligen Betriebsgases ab. Bis zu einem unteren Wert, insbesondere bis ca. 20-50 bar, lässt sich der Verdichtungsbetrieb sinnvoll betreiben. Da das Verhältnis zwischen der entspannten Menge an Betriebsgas und der verdichteten Menge an Restgas ca. 100:1 ist, steht auch im unteren Druckbereich für den anfänglichen Druck des Betriebsgases genügend Energie zum Betrieb des Verdichters zur Verfügung.

Vorzugsweise ist zwischen dem Betriebsgasbehälter und der Turbine eine Entspannungsvorrichtung zur Vorentspannung des Betriebsgases auf einen Druck zwischen 20 bar und 50 bar angeordnet. Diese Anordnung hat den Vorteil, dass über einen weiteren Bereich einen konstanten Vordruck auf der Entspannungsseite aufgebaut wird, der vom anfänglichen Druck des Betriebsgases unabhängig ist.

Zweckdienlicherweise weist das verdichtete Restgas einen Druck von ca. 5-50 bar auf. Dieses Druckniveau ist ausreichend, um das Restgas bei einer für ein Unterwasserfahrzeug üblichen Tauchtiefe, insbesondere bei einer Tauchtiefe von 50-500 m aus dem Unterwasserfahrzeug in das umgebende Meereswasser zu befördern.

Nach einer bevorzugten Variante ist an der Gasableitung ein Gasbehälter für das Restgas vorgesehen. Der Gasbehälter ist insbesondere als Druckbehälter ausgebildet und dem Verdichter nachgeschaltet, um das komprimierte Restgas aufzunehmen. Der Gasbehälter ist alternativ dem Verdichter vorgeschaltet, so dass eine ausreichende Menge an Restgas angesammelt wird, bevor dieses verdichtet wird.

Nach einer weiteren bevorzugten Variante wird das verdichtete Restgas aus dem Unterwasserfahrzeugs hinausgeleitet, indem die Gasableitung, an welcher der Verdichter angeordnet ist, außerhalb des Unterwasserfahrzeugs mündet.

Vorteilhafterweise ist ein elektrischer Generator mit der Turbine gekoppelt und wird durch die Turbine angetrieben. Somit wird die überschüssige mechanische Energie in elektrische Energie umgewandelt, die z.B. die Brennstoffzellenanlage entlasten könnte und in Notfällen könnte über den Generator Strom erzeugt werden, solange der Druck auf der Eingangsseite der Turbine ausreichend hoch ist. Insbesondere ist der Generator derart ausgestaltet, dass seine Leistung mit abnehmendem Druck ebenfalls reduziert wird.

Die überschüssige mechanische Energie der Turbine wird zudem zur direkten Antriebsunterstützung eingesetzt, indem die Turbine zweckdienlicherweise mit einem Antriebspropeller des Fahrzeugs gekoppelt ist. Möglich ist auch eine Kombination von einem direkt von der Turbine angetrieben Antriebspropeller und einem an der Turbine gekoppelten elektrischen Generator.

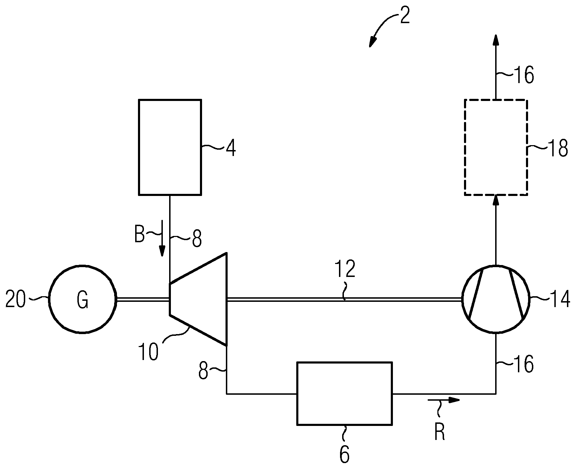

Ein Ausführungsbeispiel der Erfindung wird anhand einer Zeichnung näher erläutert. Hierin zeigt die einzige Figur schematisch ein Antriebssystem 2 für ein hier nicht näher dargestelltes Unterwasserfahrzeug, umfassend einen Betriebsgasbehälter 4 und eine Brennstoffzellenanlage 6. Der Betriebsgasbehälter 4 ist im gezeigten Ausführungsbeispiel ein Druckbehälter, in dem der Wasserstoff unter hohem Druck gelagert wird. Ein Betriebsgas B, insbesondere Wasserstoff, wird über eine Betriebsgasleitung 8 in die Brennstoffzellenanlage 6 geleitet, wo es mit dem anderen Betriebsgas, in diesem Fall Sauerstoff, abreagiert. Für das Betriebsgas Sauerstoff ist insbesondere ebenfalls ein Betriebsgasbehälter vorgesehen, der in der Figur jedoch nicht gezeigt ist.

Im Betriebsgasbehälter 4 befindet sich der Wasserstoff unter einem anfänglichen Druck zwischen 350 bar. An der Betriebsgasleitung 8 ist eine Turbine 10 angeordnet, durch welche der Wasserstoff auf dem Weg zur Brennstoffzellenanlage 6 strömt. In der Turbine 10 wird der Wasserstoff auf ca. 5-10 bar entspannt, bevor es der Brennstoffzellenanlage 6 zugeführt wird.

Die Turbine 10 weist Getriebesystem 12 auf, welches hierbei symbolisch als eine Turbinenwelle dargestellt ist, an der ebenfalls ein Verdichter 14 angeordnet ist. Der Verdichter 14 dient dazu, unverbrauchtes Restgas R aus der Brennstoffzellenanlage 6 zu komprimieren, um dieses gegen den Druck des Wassers, wenn das Unterwasserfahrzeug eingetaucht ist, ins Meerwasser fördern zu können. Mit Hilfe des Verdichters 14 wird das Restgas R auf ca. 5-20 bar verdichtet. Der Druck des verdichteten Restgases hängt dabei insbesondere von der Tauchtiefe ab. Der Verdichter 14 ist dabei an einer Gasableitung 16 angeordnet, über welche das Restgas R aus der Brennstoffzellenanlage 6 hinausgeleitet wird und die insbesondere außerhalb des Unterwasserfahrzeugs mündet.

In der Figur ist zudem mit gestrichelter Linie ein weiterer, dem Verdichter 14 nachgeschalterer Gasbehälter 18 angedeutet, der optional in der Gasableitung 16 integriert werden kann. Der Gasbehälter 18 dient zur internen Speicherung des Restgases R, bevor es aus dem Unterwasserfahrzeug abgeleitet wird. Alternativ kann die Gasableitung 16 nur bis zum Gasbehälter 18 führen, so dass jegliches in der Brennstoffzellenanlage 6 entstandene Restgas R am Bord des Unterwasserfahrzeugs im Gasbehälter 18 unter hohem Druck gelagert wird, bis der Gasbehälter 18 entleert oder ausgetauscht werden kann.
Im gezeigten Ausführungsbeispiel wird die überschüssige mechanische Energie der Turbine zudem verwendet, um einen elektrischen Generator 20 anzutreiben, der im Energiesystem des Unterwasserfahrzeugs integriert ist. Die Turbine 10 kann zudem für direkte Antriebsunterstützung eingesetzt werden, indem sie z.B. mechanisch mit einem hier nicht näher gezeigten Antriebspropeller verbunden ist.

Durch die Ankopplung der Turbine 10 mit dem Verdichter 14 zeichnet sich das Antriebssystem 2 durch eine hohe Energieeffizienz aus, da kein zusätzlicher, elektrischer Motor für den Betrieb des Verdichters 14 erforderlich ist.

## Patentansprüche

1. Antriebssystem (2) für ein Wasserfahrzeug, insbesondere für ein Unterwasserfahrzeug wie ein U-Boot oder ein unbemanntes Unterwasserfahrzeug, umfassend eine Brennstoffzellenanlage (6), mindestens einen Betriebsgasbehälter (4) zum Versorgen der Brennstoffzellenanlage (6) mit einem Betriebsgas (B), eine zwischen dem Betriebsgasbehälter (4) und der Brennstoffzellenanlage (6) angeordnete Turbine (10) zum Entspannen des Betriebsgases (B) vor seinem Eintritt in die Brennstoffstellenanlage (6) sowie einen an einer Gasableitung (16) angeordneten Verdichter (14) zum Verdichten eines Restgases (R) aus der Brennstoffstellenanlage (6), wobei der Verdichter (14) und die Turbine (10) ein gemeinsames Getriebesystem aufweisen.

2. Antriebssystem (2) nach Anspruch 1,
wobei das Betriebsgas (B) vor der Turbine (10) einen Druck von mindestens ca. 200 bar, insbesondere ca. 350, insbesondere ca. 700 bar und nach der Turbine (10) einen Druck von ca. 5-10 bar aufweist.

3. Antriebssystem (2) nach einem der vorhergehenden Ansprüche,
wobei zwischen dem Betriebsgasbehälter (4) und der Turbine (10) eine Entspannungsvorrichtung zur Vorentspannung des Betriebsgases (B) auf einen Druck zwischen 20 bar und 50 bar angeordnet ist.

4. Antriebssystem (2) nach einem der vorhergehenden Ansprüche,
wobei das verdichtete Restgas (R) einen Druck von ca. 5-50 bar aufweist.

5. Antriebssystem (2) nach einem der vorhergehenden Ansprüche,
wobei an der Gasableitung (16) ein Gasbehälter (18) für das Restgas (R) vorgesehen ist.

6. Antriebssystem (2) nach einem der vorhergehenden Ansprüche,
wobei die Gasableitung (16) außerhalb des Unterwasserfahrzeugs mündet.

7. Antriebssystem (2) nach einem der vorhergehenden Ansprüche,
wobei ein elektrischer Generator (20) mit der Turbine (10) gekoppelt ist.

8. Antriebssystem (2) nach einem der vorhergehenden Ansprüche,
wobei die Turbine (10) mit einem Antrieb des Fahrzeugs gekoppelt ist.

9. Verfahren zum Betrieb eines Antriebssystems (2) für ein Wasserfahrzeug, insbesondere für ein Unterwasserfahrzeug wie ein U-Boot oder ein unbemanntes Unterwasserfahrzeug, wobei ein Betriebsgas (B) aus mindestens einem Betriebsgasbehälter (4) in einer Turbine (10) entspannt wird, das entspannte Betriebsgas (B) anschließend in eine Brennstoffzellenanlage (6) zum Verbrennen eingeleitet wird, nach der Verbrennung des Betriebsgases (B) in der Brennstoffzellenanlage (6) Restgas (R) aus der Brennstoffzellenanlage (6) abgeleitet und mittels eines Verdichters (14) verdichtet wird, wobei der Verdichter (14) durch die Turbine (10) angetrieben wird.

10. Verfahren nach Anspruch 9,
wobei das Betriebsgas (B) in der Turbine (10) von einem Druck von mindestens ca. 200 bar, insbesondere ca. 350, insbesondere ca. 700 bar auf einen Druck von ca. 5-10 bar entspannt wird.

11. Verfahren nach einem der Ansprüche 9 oder 10,
wobei das Betriebsgas (B) vor der Turbine (10) auf einen Druck zwischen 20 bar und 50 bar vorentspannt wird.

12. Verfahren nach einem der Ansprüche 9 bis 11,
wobei das Restgas (R) auf einen Druck von ca. 5-50 bar verdichtet wird.

13. Verfahren nach einem der Ansprüche 9 bis 12,
wobei das Restgas (R) in einem Gasbehälter (18) gespeichert wird.

14. Verfahren nach einem der Ansprüche 9 bis 13,
wobei das verdichtete Restgas aus dem Unterwasserfahrzeug hinausgeleitet wird.

15. Verfahren (2) nach einem der Ansprüche 9 bis 14,
wobei ein elektrischer Generator (20) durch die Turbine (10) angetrieben wird.

16. Verfahren (2) nach einem der Ansprüche 9 bis 15,
wobei ein Antrieb des Wasserfahrzeugs durch die Turbine (10) angetrieben wird.

17. Wasserfahrzeug, insbesondere für ein Unterwasserfahrzeug wie ein U-Boot oder ein unbemanntes Unterwasserfahrzeug, mit einem Antriebssystem (2) nach einem der Ansprüche 1 bis 8.

## Claims

1. Drive system (2) for a water vehicle, in particular for an underwater vehicle such as a submarine or an unmanned underwater vehicle, comprising a fuel cell system (6), at least one operating gas container (4) for supplying the fuel cell system (6) with an operating gas (B), a turbine (10) arranged between the operating gas container (4) and the fuel cell system (6) for depressurising the operating gas (B) before it enters the fuel cell system (6) and a compressor (14) arranged at a gas outlet (16) for compressing a residual gas (R) from the fuel cell system (6), wherein the compressor (14) and the turbine (10) have a shared transmission system.

2. Drive system (2) according to claim 1,
wherein the operating gas (B) upstream of the turbine (10) has a pressure of at least approx. 200 bar, in particular approx. 350, in particular approx. 700 bar and downstream of the turbine (10) a pressure of approx. 5-10 bar.

3. Drive system (2) according to one of the preceding claims,
wherein a depressurisation apparatus for pre-depressurising the operating gas (B) to a pressure between 20 bar and 50 bar is arranged between the operating gas container (4) and the turbine (10).

4. Drive system (2) according to one of the preceding claims,
wherein the compressed residual gas (R) has a pressure of approx. 5-50 bar.

5. Drive system (2) according to one of the preceding claims,
wherein a gas container (18) for the residual gas (R) is provided at the gas outlet (16).

6. Drive system (2) according to one of the preceding claims,
wherein the gas outlet (16) opens to the exterior of the underwater vehicle.

7. Drive system (2) according to one of the preceding claims,
wherein an electric generator (20) is coupled to the turbine (10).

8. Drive system (2) according to one of the preceding claims,
wherein the turbine (10) is coupled to a drive of the vehicle.

9. Method for operating a drive system (2) for a water vehicle, in particular for an underwater vehicle such as a submarine or an unmanned underwater vehicle, wherein an operating gas (B) from at least one operating gas container (4) is depressurised in a turbine (10), the depressurised operating gas (B) is then introduced into a fuel cell system (6) for combustion, and residual gas (R) is discharged from the fuel cell system (6) after combustion of the operating gas (B) in the fuel cell system (6) and is compressed by means of a compressor (14), wherein the compressor (14) is driven by the turbine (10).

10. Method according to claim 9,
wherein the operating gas (B) in the turbine (10) is depressurised from a pressure of at least approx. 200 bar, in particular approx. 350, in particular approx. 700 bar to a pressure of approx. 5-10 bar.

11. Method according to one of claims 9 or 10,
wherein the operating gas (B) upstream of the turbine (10) is pre-depressurised to a pressure between 20 bar and 50 bar.

12. Method according to one of claims 9 to 11,
wherein the residual gas (R) is compressed to a pressure of approx. 5-50 bar.

13. Method according to one of claims 9 to 12,
wherein the residual gas (R) is stored in a gas container (18).

14. Method according to one of claims 9 to 13,
wherein the compressed residual gas is routed out of the underwater vehicle.

15. Method (2) according to one of claims 9 to 14,
wherein an electric generator (20) is driven by the turbine (10).

16. Method (2) according to one of claims 9 to 15,
wherein a drive of the water vehicle is driven by the turbine (10).

17. Water vehicle, in particular for an underwater vehicle such as a submarine or an unmanned underwater vehicle, having a drive system (2) according to one of claims 1 to 8.

## Revendications

1. Système ( 2 ) de propulsion d'un véhicule nautique, notamment d'un véhicule sous l'eau comme un sous-marin ou un véhicule sous l'eau sans équipage, comprenant une installation ( 6 ) de pile à combustible, au moins un réservoir ( 4 ) de gaz de fonctionnement pour alimenter l'installation ( 6 ) de pile à combustible en un gaz ( B ) de fonctionnement, une turbine ( 10 ) montée entre le réservoir ( 4 ) de gaz de fonctionnement et l'installation ( 6 ) de pile à combustible, afin de détendre le gaz ( B ) de fonctionnement avant son entrée dans l'installation ( 6 ) de pile à combustible, ainsi qu'un compresseur ( 4 ) monté sur un conduit ( 16 ) d'évacuation de gaz pour comprimer un gaz ( R ) restant, sortant de l'installation ( 6 ) de pile à combustible, le compresseur ( 14 ) et la turbine ( 10 ) ayant un système de transmission commun.

2. Système ( 2 ) de propulsion suivant la revendication 1, dans lequel le gaz ( B ) de fonctionnement a, avant la turbine ( 10 ) une pression d'au moins environ 200 bar, notamment d'environ 350, notamment d'environ 700 bar et, après la turbine ( 10 ), une pression d'environ 5 à 10 bar.

3. Système ( 2 ) de propulsion suivant l'une des revendications précédentes,
dans lequel il est monté, entre le réservoir ( 4 ) de gaz de fonctionnement et la turbine ( 10 ), un dispositif de détente pour détendre au préalable le gaz ( B ) de fonctionnement jusqu'à une pression comprise entre 20 bar et 50 bar.

4. Système ( 2 ) de propulsion suivant l'une des revendications précédentes,
dans lequel le gaz ( R ) restant comprimé a une pression d'environ 5 à 50 bar.

5. Système ( 2 ) de propulsion suivant l'une des revendications précédentes,
dans lequel un réservoir ( 18 ), pour le gaz ( R ) restant, est prévu sur le conduit ( 16 ) d'évacuation du gaz.

6. Système ( 2 ) de propulsion suivant l'une des revendications précédentes,
dans lequel le conduit ( 16 ) d'évacuation du gaz débouche à l'extérieur du véhicule sous l'eau.

7. Système ( 2 ) de propulsion suivant l'une des revendications précédentes,
dans lequel une génératrice ( 20 ) électrique est couplée à la turbine ( 10 ).

8. Système ( 2 ) de propulsion suivant l'une des revendications précédentes,
dans lequel la turbine ( 10 ) est couplée à une propulsion du véhicule.

9. Procédé pour faire fonctionner un système ( 2 ) de propulsion d'un véhicule nautique, notamment d'un véhicule sous l'eau comme un sous-marin ou un véhicule sous l'eau sans équipage,
dans lequel on détend, dans une turbine ( 10 ), un gaz ( B ) de fonctionnement provenant d'au moins un réservoir ( 4 ) de gaz de fonctionnement, on envoie ensuite pour combustion le gaz ( B ) de fonctionnement détendu dans une installation ( 6 ) de pile à combustible, après la combustion du gaz ( B ) de fonctionnement dans l'installation ( 6 ) de pile à combustible, on évacue le gaz ( R ) restant de l'installation ( 6 ) de pile à combustible et on le comprime au moyen d'un compresseur ( 14 ), le compresseur ( 14 ) étant entraîné par la turbine ( 10 ).

10. Procédé suivant la revendication 9,
dans lequel on détend le gaz ( B ) de fonctionnement dans la turbine ( 10 ) d'une pression d'au moins environ 200 bar, notamment d'environ 350, notamment d'environ 700 bar, jusqu'à une pression d'environ 5 à 10 bar.

11. Procédé suivant l'une des revendications 9 ou 10,
dans lequel on détend au préalable le gaz ( B ) de fonctionnement avant la turbine ( 10 ), jusqu'à une pression comprise entre 20 bar et 50 bar.

12. Procédé suivant l'une des revendications 9 à 11,
dans lequel on comprime le gaz ( R ) restant jusqu'à une pression d'environ 5 à 50 bar.

13. Procédé suivant l'une des revendications 9 à 12,
dans lequel on emmagasine le gaz ( R ) restant dans un réservoir ( 18 ).

14. Procédé suivant l'une des revendications 9 à 12,
dans lequel on fait sortir le gaz restant comprimé du véhicule sous l'eau.

15. Procédé ( 2 ) suivant l'une des revendications 9 à 14,
dans lequel on entraîne une génératrice ( 20 ) électrique par la turbine ( 10 ).

16. Procédé ( 2 ) suivant l'une des revendications 9 à 15,
dans lequel on entraîne une propulsion du véhicule nautique par la turbine ( 10 ).

17. Véhicule nautique, notamment véhicule sous l'eau comme un sous-marin ou véhicule sous l'eau sans équipage, ayant un système ( 2 ) de propulsion suivant l'une des revendications 1 à 8.
